# EUROPEAN PATENT SPECIFICATION

(11) **EP 1 597 108 B1**
(45) Date of publication and mention of the grant of the patent: **28.11.2007**
(21) Application number: 04714612.1
(22) Date of filing: 25.02.2004
(51) Int. Cl.: B60N 2/36

(54) **POWER RETRACTION SYSTEM FOR A FOLD IN FLOOR SEAT ASSEMBLY**
SITZANORDNUNG MIT EINEM KRAFTRETRAKTIONSSYSTEM FÜR EINE VERSTAUUNG IM BODEN
SYSTEME DE RETRACTION MECANIQUE POUR ENSEMBLE SIEGE DE PLANCHER INCORPORE

(30) Priority: 25.02.2003 US 450259 P
(43) Date of publication of application: 23.11.2005
(73) Proprietor: Intier Automotive Inc., Newmarket, Ontario L3Y 4X7 (CA)
(72) Inventor: HOLDAMPF, Carl, J., Farmington Hills, MI 48335 (US)
(74) Representative: Hössle Kudlek & Partner
(86) International application number: PCT/US2004/005510
(87) International publication number: WO 2004/076228

(56) References cited:
- WO-A-02/14104
- FR-A- 2 734 767
- US-A- 5 269 581
- US-A1- 2001 052 718
- PATENT ABSTRACTS OF JAPAN vol. 2002, no. 04, 4 August 2002 (2002-08-04) & JP 2001 347865 A (TAKASHIMAYA NIPPATSU KOGYO CO LTD; SHIROKI CORP), 18 December 2001 (2001-12-18)
- PATENT ABSTRACTS OF JAPAN vol. 2002, no. 06, 4 June 2002 (2002-06-04) & JP 2002 036925 A (TAKASHIMAYA NIPPATSU KOGYO CO LTD; SHIROKI CORP), 6 February 2002 (2002-02-06)

## Description

### BACKGROUND OF THE INVENTION

### 1. Field of the Invention

The invention relates to a seat assembly for an automotive vehicle. More particularly, the invention relates to a power retraction system for automatically moving the seat assembly between a seating position and a stowed position.

### 2. Description of the Related Art

Automotive vehicles include seat assemblies for supporting occupants within the vehicle. A seat assembly typically includes a generally horizontal seat cushion and upright seat back coupled to the seat cushion. It is widely known in the seating art to provide a stowable seat assembly that is manually movable between a seating position for supporting the occupants above a floorpan in the vehicle and a stowed position nested within a recess formed in the floor of the vehicle.

A retracting assembly for moving a seat assembly is known from US 2001/0052718A1, which is the closest known prior art.

It remains desirable to provide a power retracting system for automatically moving the seat assembly between the seating and stowed positions.

### SUMMARY OF THE INVENTION

According to one aspect of the invention, a retracting assembly is coupled between a seat assembly and a floor for moving the seat assembly between a seating position and a stowed position. The retracting assembly includes a rear link extending between an upper end pivotally coupled to the seat assembly and a lower end pivotally coupled to the floor. An output shaft is rotatably coupled to the seat assembly. An actuator is fixedly coupled to the seat assembly and operatively coupled to the output shaft for rotatably driving the output shaft. A swing arm having a distal end extends radially outwardly from the output shaft for rotation therewith. A link arm extends between a first end pivotally coupled to the distal end of the swing arm and a second end pivotally coupled to the floor for moving the seat assembly between the seating and stowed positions in response to corresponding rotation of the output shaft by the actuator.

### BRIEF DESCRIPTION OF THE DRAWINGS

Advantages of the present invention will be readily appreciated as the same becomes better understood by reference to the following detailed description when considered in connection with the accompanying drawings wherein:

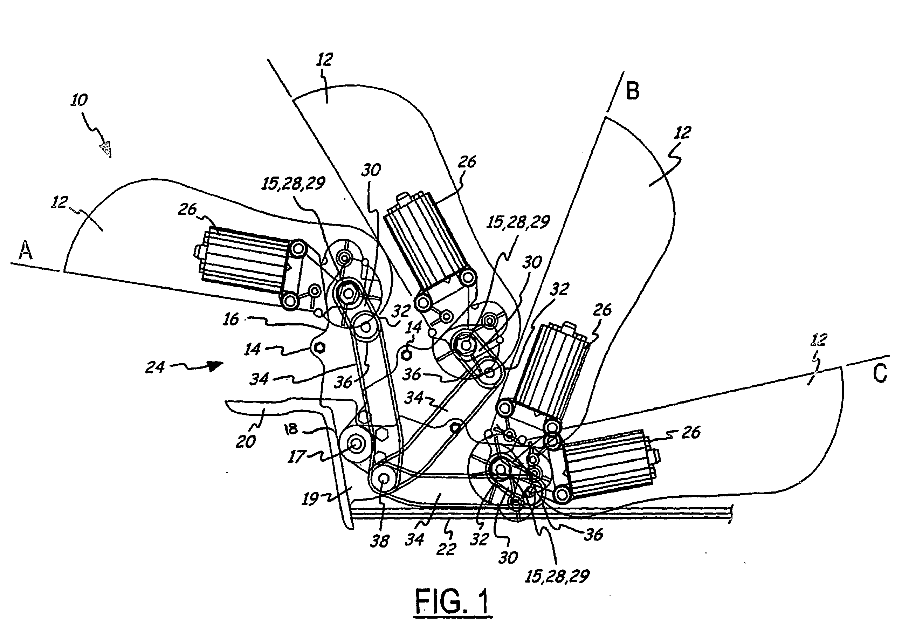

Figure 1 is a side view of a power retracting assembly for moving a seat assembly between a seating position and a stowed position.

### DETAILED DESCRIPTION OF THE PREFERRED EMBODIMENT

Referring to Figure 1, a seat assembly for an automotive vehicle is generally indicated at 10. The seat assembly 10 includes a seat cushion 12. A rear link 14 extends between an upper end 16 and a lower end 18. The upper end 16 is pivotally coupled to the seat cushion 12 by an upper pivot pin 15. The lower end 18 is pivotally coupled to a bracket 19 by a lower pivot pin 17. The bracket 19 is fixedly secured to a floor pan 20 in the vehicle. The rear link 14 allows selective movement of the seat cushion 12 between a generally horizontal seating position spaced above the floor pan 20, indicated in Figure 1 as A, a stowed position or lying flat against the floor pan 20 nested within a recess 22 formed in the floor pan 20, indicated in Figure 1 as C, and an intermediate position therebetween, generally indicated in Figure 1 as B.

A retracting assembly 24 is operatively coupled between the seat assembly 10 and the floor pan 20 for automatically moving the seat cushion 12 between the seating and stowed positions. The retracting assembly 24 includes an actuator or electric motor 26 fixedly supported by the seat assembly 10. An output shaft 28 extends axially outwardly from the electric motor 26 and defines a shaft axis 29 aligned with the upper pivot pin 15. The output shaft 28 is rotatably driven about the shaft axis 29 by the motor 26 when the motor 26 is selectively energized by current provided by the vehicle's electrical system, as commonly known to those skilled in the art. The output shaft 28 is rotatably driven by the motor 26 in either a clockwise or counterclockwise direction, as viewed in Figure 1, depending on the direction of current flow provided to the motor 26.

Alternatively, the upper end 16 of the rear link 14 is pivotally coupled to the seat cushion 12 by the output shaft 28 instead of the upper pivot pin 15.

A swing arm 30 having a distal end 32 extends radially outwardly from the output shaft 28 for rotation with the output shaft 28 about the shaft axis 29. A link arm 34 extends between a first end 36 and an opposite second end 38. The first end 36 is pivotally coupled to the distal end 32 of the swing arm 30. The second end 38 is pivotally coupled to the bracket 19.

In operation, the seat cushion 12 is moved from the seating position A to the stowed position C by energizing the motor 26 to provide torque to and cause counterclockwise rotation of the output shaft 28. The swing arm 30 rotates with the output shaft 28 about the shaft axis 29 in the counterclockwise direction. The link arm 34 is tensioned by the counterclockwise rotation of the swing arm 30 about the shaft axis 29. In response, the seat cushion 12 and the rear link 14 together pivot clockwise about the lower pivot pin 17 until the intermediate position B. At the intermediate position B, the rear link 14 contacts the floor pan 20, which prevents further clockwise rotation about the pivot pin 17. Subsequently, the counterclockwise torque provided by the motor 26 is re-directed toward rotation of the seat cushion 12 and the motor 26 in a clockwise direction about the shaft axis 29 from the intermediate position B to the stowed position C. The seat cushion 12 is thus rotated generally 180 degrees from the seating position A to the stowed position wherein the upper seating surface of the seat cushion 12 is face down against the floor pan 20 in the stowed position.

The seat cushion 12 can be returned to the seating position A from the stowed position C by reversing the current flow provided to the motor 26. Clockwise torque provided by the motor 26 causes counterclockwise rotation of the seat cushion 12 and the motor 26 about the shaft axis 29 from the stowed position C toward the intermediate position B. At the intermediate position B, counterclockwise rotation of the seat cushion 12 and the motor 26 about the shaft axis 29 is prevented by abutting or interfering engagement between the seat cushion 12 and the rear link 14. Subsequently, the clockwise torque provided by the motor 26 is re-directed toward clockwise rotation of the output shaft 28 and the swing arm 30 about the shaft axis 29. The link arm 34 is compressed by the clockwise rotation of the swing arm 30 about the shaft axis 29. In response, the seat cushion 12 and the rear link 14 together pivot counterclockwise about the lower pivot pin 17 from the intermediate position B to the seating position A.

Alternatively, the motor 26 can be replaced by a linear actuator having a linear rack of teeth engaged with a toothed gear coupled to the output shaft 28 to cause counterclockwise or clockwise rotation of the output shaft 28 in response to corresponding linear displacement of the rack of teeth.

The invention has been described in an illustrative manner, and it is to be understood that the terminology, which has been used, is intended to be in the nature of words of description rather than of limitation.

Many modification and variations of the present invention are possible in light of the above teachings. It is, therefore, to be understood that within the scope of the appended claims, the invention may be practiced other than as specifically described.

## Claims

1. A retracting assembly for moving a seat assembly (10) having a seat cushion (12), between a seating position and a stowed position, the retracting assembly comprising:
a rear link (14) operatively coupled between the seat assembly (10) and a floor (20) of a vehicle;
an output shaft (28) rotatably coupled to the seat assembly (10);
an actuator (26) attached to the seat assembly (10) and operatively coupled to the output shaft (28) for rotatably driving the output shaft (28);
a swing arm (30) having a distal end (32) extending radially outwardly from the output shaft (28) for rotation therewith; and
a link arm (34) extending between a first end (36) pivotally coupled to the distal end (32) of the swing arm (30) and a second end (38) pivotally coupled to the floor (20) for moving the seat assembly (10) between the seating and stowed positions in response to corresponding rotation of the output shaft (28) by the actuator (26).

2. The retracting assembly of Claim 1 wherein the rear link (14) includes an upper end (16) pivotally coupled to the seat assembly (10) and a lower end (18) pivotally coupled to the floor (20) of the vehicle.

3. The retracting assembly of Claim 2 including a bracket (19) attached to the floor (20) of the vehicle.

4. The retracting assembly of Claim 3 wherein the bracket (19) is pivotally coupled to the lower end (18) of the rear link (14).

5. The retracting assembly of Claim 4 including a lower pivot pin (17) for coupling the bracket (19) and lower end (18) of the rear link (14).

6. The retracting assembly of Claim 2 wherein the upper end (16) of the rear link (14) is pivotally coupled to the seat cushion (12).

7. The retracting assembly of Claim 6 including an upper pivot pin (15) for coupling the seat cushion (12) and the upper end (18) of the rear link (14).

8. The retracting assembly of Claim 6 wherein the output shaft (28) couples the seat cushion (12) and the upper end (18) of the rear link (14).

9. The retracting assembly of Claim 1 wherein the actuator (26) comprises a motor.

10. The retracting assembly of Claim 1 wherein the actuator (26) comprises a linear actuator having a linear rack of teeth engaged with a toothed gear coupled to the output shaft (28).

11. The retracting assembly of Claim 1 wherein the actuator (26) is attached to the seat cushion (12).

## Patentansprüche

1. Klappanordnung zum Bewegen einer Sitzanordnung (10) mit einem Sitzkissen (12), zwischen einer Sitzposition und einer verstauten Position, wobei die Klappanordnung folgendes umfasst:
ein hinteres Verbindungsglied (14), das funktional zwischen die Sitzanordnung (10) und einen Boden (20) eines Fahrzeugs gekoppelt ist,
eine Abtriebswelle (28), die mit der Sitzanordnung (10) drehbar gekoppelt ist,
einen Aktor (26), der an der Sitzanordnung (10) befestigt ist und mit der Abtriebswelle (28) funktional gekoppelt ist, um die Abtriebswelle (28) rotatorisch anzutreiben,
einen Schwenkarm (30), mit einem distalen Ende (32), das sich von der Abtriebswelle (28) radial auswärts erstreckt, um sich mit dieser zu drehen, und
ein Verbindungsglied (34), das sich zwischen einem ersten Ende (36), das an dem distalen Ende (32) des Schwenkarms (30) angelenkt ist, und einem zweiten Ende (34), das an dem Boden (20) angelenkt ist, erstreckt, um die Sitzanordnung (10) in Reaktion auf eine entsprechende Drehung der Abtriebswelle (28) durch den Aktor (26) zwischen der Sitzposition und der verstauten Position zu bewegen.

2. Klappanordnung nach Anspruch 1, wobei das hintere Verbindungsglied (14) ein oberes Ende (16), das an der Sitzanordnung (10) angelenkt ist, und ein unteres Ende (18), das an dem Boden (20) des Fahrzeugs angelenkt ist, aufweist.

3. Klappanordnung nach Anspruch 2, die eine an dem Boden (20) des Fahrzeugs angebrachte Stütze (19) aufweist.

4. Klappanordnung nach Anspruch 3, wobei die Stütze (19) an dem unteren Ende (18) des hinteren Verbindungsgliedes (14) angelenkt ist.

5. Klappanordnung nach Anspruch 4, die einen unteren Schwenkstift (17) aufweist, um die Stütze (19) und das untere Ende (18) des hinteren Verbindungsgliedes (14) zu koppeln.

6. Klappanordnung nach Anspruch 2, wobei das obere Ende (16) des hinteren Verbindungsgliedes (14) an dem Sitzkissen (12) angelenkt ist.

7. Klappanordnung nach Anspruch 6, die einen oberen Schwenkstift (15) aufweist, um das Sitzkissen (12) und das obere Ende (16) des hinteren Verbindungsgliedes (14) zu koppeln.

8. Klappanordnung nach Anspruch 6, wobei die Abtriebswelle (28) das Sitzkissen (12) und das obere Ende (18) des hinteren Verbindungsgliedes (14) koppelt.

9. Klappanordnung nach Anspruch 1, wobei der Aktor (26) einen Motor umfasst.

10. Klappanordnung nach Anspruch 1, wobei der Aktor (26) einen linearen Aktor aufweist, der eine geradlinige Zahnstange umfasst, die mit einem mit der Abtriebswelle (28) gekoppelten Zahnrad in Eingriff ist.

11. Klappanordnung nach Anspruch 1, wobei der Aktor (26) an dem Sitzkissen (12) befestigt ist.

## Revendications

1. Ensemble de rétraction pour déplacer un ensemble formant siège (10) comprenant un coussin de siège (12) entre une position assise et une position escamotée, l'ensemble de rétraction comprenant :
un bras arrière (14) fonctionnellement couplé entre l'ensemble formant siège (10) et un plancher (20) d'un véhicule;
un arbre de sortie (20) couplé en rotation à l'ensemble formant siège (10) ;
un actionneur (26) attaché à l'ensemble formant siège (10) et fonctionnellement couplé à l'arbre de sortie (28) pour entraîner en rotation l'arbre de sortie (28) ;
un bras pivotant (30) ayant une extrémité distale (32) s'étendant radialement vers l'extérieur depuis l'arbre de sortie (28) en vue d'une rotation avec celui-ci ; et
un bras de liaison (34) s'étendant entre une première extrémité (36) couplée en pivotement à l'extrémité distale (32) du bras pivotant (30) et une seconde extrémité (38) couplée en pivotement au plancher (20) pour déplacer l'ensemble formant siège (10) entre la position assise et la position escamotée en réponse à une rotation correspondante de l'arbre de sortie (28) par l'actionneur (26).

2. Ensemble de rétraction selon la revendication 1, dans lequel le bras arrière (14) inclut une extrémité supérieure (16) couplée en pivotement à l'ensemble formant siège (10) et une extrémité inférieure (18) couplée en pivotement au plancher (20) du véhicule.

3. Ensemble de rétraction selon la revendication 2, incluant une platine (19) attachée au plancher (20) du véhicule.

4. Ensemble de rétraction selon la revendication 3, dans lequel la platine (19) est couplée en pivotement à l'extrémité inférieure (18) du bras arrière (14).

5. Ensemble de rétraction selon la revendication 4, incluant une tige de pivot inférieure (17) pour coupler la platine (19) et l'extrémité inférieure (18) du bras arrière (14).

6. Ensemble de rétraction selon la revendication 2, dans lequel l'extrémité supérieure (16) du bras arrière (14) est couplée en pivotement au coussin de siège (12).

7. Ensemble de rétraction selon la revendication 6, incluant une tige de pivot supérieure (15) pour coupler le coussin de siège (12) et l'extrémité supérieure (16) du bras arrière (14).

8. Ensemble de rétraction selon la revendication 6, dans lequel l'arbre de sortie (28) couple le coussin de siège (12) et l'extrémité supérieure (16) du bras arrière (14).

9. Ensemble de rétraction selon la revendication 1, dans lequel l'actionneur (26) comprend un moteur.

10. Ensemble de rétraction selon la revendication 1, dans lequel l'actionneur (26) comprend un actionneur linéaire ayant une crémaillère dentée linéaire engagée avec une roue dentée couplée à l'arbre de sortie (28).

11. Ensemble de rétraction selon la revendication 1, dans lequel l'actionneur (26) est attaché au coussin de siège (12).
